# EUROPEAN PATENT APPLICATION

(11) **EP 2 053 237 A1**
(43) Date of publication of application: **29.04.2009**
(21) Application number: 07822897.0
(22) Date of filing: 14.08.2007
(51) Int. Cl.: F03B 13/22

(54) **TURBINE POWERED BY THE SEA'S WAVES**

(30) Priority: 14.08.2006 ES 200602201; 29.12.2006 ES 200603320
(71) Applicant: Jauregui Garmendia, Ignacio, 20002 San Sebastián (ES)
(72) Inventor: Jauregui Garmendia, Ignacio, 20002 San Sebastián (ES)
(74) Representative: Molina Garcia, Julia
(86) International application number: PCT/ES2007/000489
(87) International publication number: WO 2008/020106

(57) **Abstract**

The invention relates to a turbine designed to utilize the kinetic energy of the sea's waves in order to convert it into a rotary movement via turbine elements arranged on the surface of a platform, which contains one or more electrical energy generators, anchored in the operating position and whose stability is a function of a compartment that is in turn subdivided into other compartments filled with water or air. The platform has a front skirt with an inclined surface, on which there is a pair of ramps articulated, respectively, on the front upper edge of the floating body and to one another, the relative position of these ramps being controlled by means of positioning elements regulated electronically and by computer. The turbines consist of helical shafts arranged in a relationship of obliqueness with respect to the longitudinal axis of the body, supported on supports, and protected at the top by cowlings. In an alternative version, the assembly includes a third ramp located as a continuation of, and connected to, the second ramp, which passes above the cowling of the first turbine and supports its inner end on a support emerging from the surface of the platform.

## Description

### Object of the Invention

The present invention relates to a turbine driven by the sea's waves, providing essential novelty features and considerable advantages with regard to the means known and used for the same purposes in the current state of the art.

More particularly, the invention proposes the development of a turbine especially designed to be installed in certain marine positions, with a view to utilizing the kinetic energy associated to the movement of the sea's waves and converting it into rotary movement that can be utilized to move one or more electric generators and to thus produce electrical energy. The turbine can have variable dimensional and design configurations, or it can even be designed like an independent module that can be coupled with other modules with the same features for forming an installation having a predetermined size and capacity.

According to another object of the invention, the development of an improved manner of designing and building the turbine of the invention is also proposed in relation both to the concept of the ramps against which the sea's wave collides and to the conditions in which the incident wave moves on the surface of the floating platform divided into two portions and accompanied by an air wave created by the actual assembly, together with an anchor system for anchoring the assembly of the platform especially designed to assure optimal maintenance of the stability of the platform, without unwanted movements, regardless of the type of waves hitting the platform at any time.

The field of application of the invention is comprised within the alternative energies industry, particularly for the manufacture and installation of devices and systems for utilizing the kinetic energy of the sea's waves.

### Background and Summary of the Invention

The worldwide growing increase of energy consumption is very well known. For some years now huge importance has been given to the use of alternative energies with a view to slowly substituting the use of the ever so declining natural resources as a result of the consumption thereof by industrialized countries and by developing countries that are increasing their production capacity on a daily basis. Oil reserves and other traditional energy resource reserves are being increasingly used, and it is expected that some of them will be completely depleted, according to some estimations, in about 50 years or less. It is therefore necessary to develop other longer-lasting and less contaminating alternative energy sources which aid in at least partially palliating consumption needs, which are less contaminating and whose progressive development allows foreseeing a complete or virtually complete replacement of the natural sources after a number of years. In this sense, a considerable number of installations for utilizing solar energy or wind energy are known today which generate what are now considerable amounts of energy and directly utilize it through the electrical network or other alternative distribution networks.

However, although there has been continuous and significant evolution in the wind and solar fields the same has not occurred with the utilization of the energy generated by the sea's waves, which, like the sun or wind, is a source that cannot be depleted and is deserving of being taken into consideration.

Despite this lesser degree of development of sea energy, some installations which are able to utilize the kinetic energy of the waves in order to convert it into mechanical energy that can be easily utilized to generate electrical energy have been known for some years now. Spanish patent document number 437,598 of May 12, 1975, belonging to the present applicant, should be mentioned in this sense, said patent document disclosing an installation which forms the design basis for the turbine that will be herein described. The turbine of the earlier document was built from a body forming a generally parallelepipedic shaped floating platform, with a pair of vertical supports emerging from its upper base, and extending between such supports, a shaft bearing buckets forming the turbine that can be actuated by the waves colliding thereagainst. The body or floating platform is anchored in place and has at the front part means for breaking the incident wave, these means being formed by a pair of ramps, whose first ramp, with a lower positioning, has been fixed to the front upper edge of the mentioned body or platform, with a predetermined downward inclination, and a second ramp has been articulated to the front edge of the first ramp, this second ramp having a position that can vary by means of a jack- or screw-type element extending between both ramps.

According to this description of the turbine described in the earlier document, the present invention has been proposed with the main objective of building a new turbine for utilizing and converting the kinetic energy of the sea's waves, and such turbine is built based on the experiments and tests performed on the earlier turbine for the purpose of attaining a substantially improved model with respect to the earlier implementation, which allows more rationally utilizing the energy associated to the incident waves. This objective has been fully met by means of the turbine described below, whose main features are comprised in the characterizing part of attached claim 1.

Essentially, the turbine proposed by the invention uses the construction of a body or parallelepipedic box forming the floating platform as a starting point. The platform consists of two bodies: the electric generators would be located at the top and are ready to produce electrical energy when they are suitably actuated by the turbines and a lower body with variable dimensions, which would be formed by compartments occupied by air or water, actuated by huge pistons which would allow the inlet of air or of water according to the need to keep the suitable stability and the waterline of the platform, which would be located approximately between half a meter and one meter, constant.

This box or floating platform has on the part facing the wave a skirt with a forwardly inclined positioning with respect to the vertical of the platform, whereas the three other sides that form it are a continuation of the verticality thereof.

This platform also has on its front part a pair of ramps articulated to one another at their front edge.

The first ramp, which is in the lower position and is supported on the skirt by its lower edge by means of screws or pivots, whereas by its upper edge it is connected to the front upper edge of the platform, its position being fixed. The plane thereof is a grating which allows the passage of the wave.

The second ramp, which is located on the first ramp and articulated to the front edge of the former, forms a plane which can vary so that it faces the incident wave for the purpose of breaking said wave. The position of the second ramp is varied with respect to the first fixed ramp with the aid of hydraulic-type elements located at the end of the platform close to the ramp, allowing the opening or closing pivoting and controlling it by computer means.

The turbine installations are arranged on the upper part of the platform, with their helical shafts, supported by means of bearing elements. The rotary movement of the turbines caused by the kinetic movement of the waves is transmitted to the upper body of the platform on which the generators are located.

Each shaft or turbine is protected at its upper part by means of a generally semi-cylindrical shaped cowling element, which provides individualized coverage for each turbine, preventing the direct impact of the part of the wave that could fall on the turbines after moving up the second ramp. In this way, without stopping the pulse of the wave, it will continue along its path, traveling across the platform and rotating the turbines.

According to a preferred embodiment, the positioning of the turbine shafts is oblique in relation to the direction of the incident wave, forcing said wave to progressively move forward along each turbine, thereby favoring the progressive utilization of the wave in its path on the platform. This rotary movement is transmitted to the electric generators contained in the space of the box or platform, such that electricity is generated in situ, being transported outwardly with the aid of cables or another type of conductors.

According to the invention, the turbine assembly can also be designed such that it is an individual module with sizes that vary considerably, or even with the particularity that several independent modules can be clustered with one another to form a larger installation or they can also be clustered in a staggered manner for greater utilization.

As will be understood, the materials for the manufacture of the different components will be such that they are not subjected to the action of oxidation, and at the same time are strong enough to withstand the considerable stresses they will be subjected to during the useful operative life of the installation.

According to an alternative embodiment improved with respect to what has just been described above, a turbine installation is proposed for utilizing the kinetic energy of the sea's waves which includes the essential aspects mentioned below:
a) The incorporation of a third ramp has been provided which, in combination with the second ramp (or upward ramp) of the installation, prevents an abrupt and violent fall of the part of wave moving up said second ramp, rather allowing this to occur smoothly and progressively so that it subsequently joins the other part of the wave which has moved up the inclined skirt portion of the platform;
b) Both the second and third ramps have grooved formations on their side edges, such that they allow better channeling and guidance of the water towards the position of the turbines. These formations could also be pipe shaped for better control of the waves in extreme swell situations;
c) The thrust of the incident wave is utilized to longitudinally move a piston associated to each module, included in the intermediate compartment in which there is a combination of water and air, such that with the backward motion of the piston, an air "wave" is generated along with the water wave, counteracting the destabilizing effect that the latter may generate in the platform;
d) An anchor system for anchoring the platform has additionally been created which is obtained from concrete columns emerging from an underwater concrete anchor, which pass through holes of the platform and enable the upward/downward movement of the latter with complete reliability and stability, without the possibility of unwanted lateral or longitudinal movements;
e) Maintenance operations are simplified by means of creating an access to the inside of the platform with the installation of an outer stairway and an inner stairway, and
f) Finally, the arrangement of the anchor columns allows the installation to be able to optionally include a structure for solar panels supported directly on said columns in order to obtain electrical energy through this system during the time in which there is little or no swell.

As will be understood, the improvements introduced by the present invention in relation to this second mentioned embodiment are particularly important since they provide solutions which allow greater functional capacity and better operative stability of the assembly.

### Brief Description of the Drawings

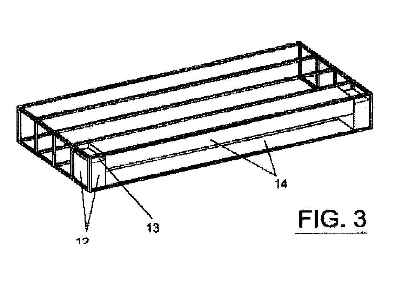

These and other features and advantages of the invention will become clearer from the following detailed description of a preferred embodiment, provided only as an illustrative and nonlimiting example in relation to the attached drawings, in which:

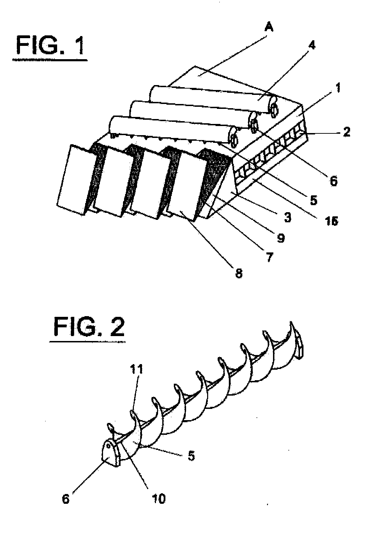

Figure 1 shows a general view of the platform in which:
   A Floating platform
      1. upper or electric generator compartment
      2. lower compartment or positional regulator
      3. skirt
      4. cowling
      5. turbine
      6. turbine support
      7. lower grating ramp
      8. upper articulated ramp
      9. vertical supports or pivots for the lower ramp
      15. third compartment or basement
Figure 2 is a perspective view of the turbine, in which
   10. helical shaft of the turbine
   11. blade or thread of the turbine
Figure 3 is a schematic depiction of a module of air and water chambers in which:
   12. piston
   13. groove of the piston
   14. air and water chamber
Figure 4 is a depiction of several independent platforms clustered together in a staggered manner.
Figure 5 is a schematic depiction of a huge staggered platform.
Figure 6 shows a schematic view of an improved turbine installation powered by the sea's waves, according to a second embodiment of the invention, at the time of arrival of an incident wave.
Figure 7 is a schematic view similar to Figure 6, with the incident wave impacting on the skirt of the platform and divided into two parts, exerting a thrust action on the piston of the intermediate compartment.
Figure 8 is a schematic view coinciding with Figure 7, but in a condition in which the incident wave is rising above the area of the ramps, and the piston of the intermediate compartment is returning to its initial position creating the air "wave".

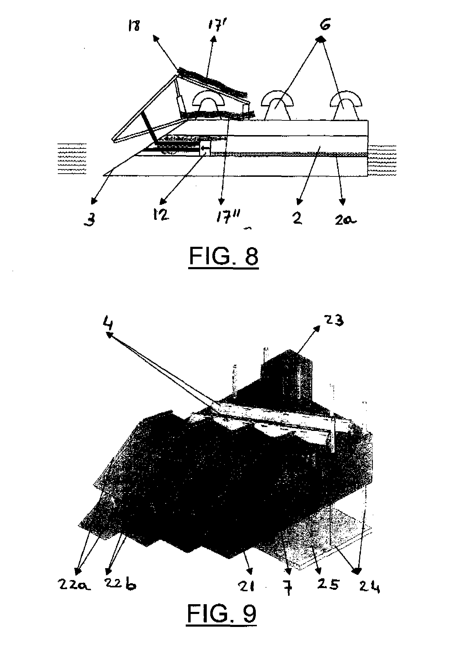

Finally, Figure 9 is a schematic top perspective view of an example of a marine installation of four modules, according to this second embodiment, for utilizing the energy of incident waves.

### Description of a Preferred Embodiment

As mentioned in the foregoing, the detailed description of the preferred embodiment of the invention will be provided below with the aid of the attached drawings, through which the same reference numbers will be used to designate identical or similar parts. Therefore, first considering Figure 1 of the drawings, a schematic perspective depiction is shown of a turbine module built according to the invention, built around a floating body A with the general configuration of a box internally formed by several compartments. Conventional electric generators (not shown in the figure) are housed in the upper compartment 1. The middle compartment 2 is a water and air chamber in turn formed by several compartments. There is a two-way piston 12 at the ends of each compartment at the upper end of which piston there is a groove 13 through which both spaces of water and air communicate. In the event that the piston moves from either one side or the other, the air that is above the water is displaced in one direction or the other, more or less air or water being accumulated in each space. These pistons 12 will be mobilized electromagnetically and by computer in order to be able to maintain the waterline of the platform A at its appropriate point. In special cases in which the platform A must support a large weight, the water of the compartments could be partially or completely replaced with air by means of powerful injectors.

This floating platform A has on its part facing the wave a skirt 3 with a forwardly inclined positioning with respect to the vertical of the platform, whereas the other three sides that form it are a continuation of the verticality of the platform, the length of the skirt being variable in depth depending on the underwater movement along with the wave in order to thus prevent underwater currents that may destabilize the platform to a greater or lesser degree. The front part that forms an inclined plane can force the incident wave to move upward when it is of a rather small size or it can force the lower portion of a wave to do so when it is of a more considerable magnitude. Two ramps 7 and 8 are located on said skirt, whose first ramp 7, with a lower positioning, is formed by a grating and is fixed to the front upper edge of the platform A, being supported on the skirt 3 by its lower part, such that it does not present opposition to the passage of the wave, and its position is fixed.

In addition, the platform 1 is extended in depth with a third compartment 15 considered to be the basement of the platform, located under the second compartment 2. The purpose of this compartment 15, which has variable dimensions, is to be a large potential air chamber given the possible circumstance of the existence of rogue waves or rough sea. Its essential purpose is to maintain the stability and the waterline of the platform at all times and constantly related to the second compartment.

According to a first preferred embodiment of the invention, an important particularity thereof is based on providing the two ramps 7 and 8 mentioned above in a position relating to the front part of the floating body or platform A, i.e., positioned above the area of the skirt 3, as depicted in Figure 1 being described. Both ramps, which are marked with reference numbers 7 and 8, are adjustable in relation to said skirt 3. The first ramp 7, i.e., the ramp occupying a lower position, is supported on the skirt 3 by its lower part by means of jacks or pivots, whereas the front upper edge of said ramp 7 is connected with the front upper edge of the body A, its position being fixed. The second ramp 8, i.e., the ramp occupying the upper position, is articulated to the lower ramp 7 by the adjacent front edges of both ramps. The open position of the upper ramp 8 is regulated by computerized hydraulic systems located in the front part of the platform A.

The invention further presents the particularity that the ramp 7 has been built with a grating configuration. Therefore, when the module is in the operating position, a wave colliding on the front part of the module will move up the inclined plane of the skirt 3 and pass through the grating of the ramp 7, with hardly any opposition from the latter, to reach the positions of the turbine elements 5 located in the upper part of the platform A. When a wave has a considerable magnitude or size, it will be divided into two parts when it collides on the ramps 7 and 8. The lower part of the wave will follow the already mentioned path, moving up on the inclined plane of the skirt 3 and passing through the grating of the lower ramp 7, whereas the upper part of the wave will move up the ramp 8 and fall by gravity in a cascade manner towards the platform A, on the protectors or cowlings 4, a direct impact on the turbine elements 5 thus being prevented, but the kinetic energy thereof being utilized by virtue of its subsequent travel on the surface of the platform. The wave is thus broken or divided, but virtually all the energy it carries is utilized.

Transversely aligned vertical supports 6 are provided from positions facing both sides of the upper surface of the platform A, such supports being bears for each of the helical shafts 10 which, extending according to the general diagonal or transverse oblique direction, form the turbine elements 5. The blades or threads 11 of these helical shafts 10, which noticeably project from under the cowling 4, have a height and a surface suitable for the action of the wave traveling across the platform A. An amount of surface thus exists which is suitable for converting the energy derived from the impact of the incident wave into a rotary movement of each of the turbine elements 5.

The rotating capacity of said shafts 10 is aided by incorporating suitable bearings (not shown) linked to these supports 6, whose rotary movement is transmitted to the electric generators located in the upper compartment 1. As can be seen in Figure 1, each of the helical shafts 10 is covered at its upper part by means of a semi-cylindrical shaped cowling 4. As previously stated, the function of the cowlings 4 is to protect the turbines 5 from the impact of the waves. Figure 2 shows a turbine 5 with its shaft 10, supports 6 and blades or threads 11.

The arrangement of several turbine elements 5 positioned along the surface of the floating body A can be seen through the discussed figures. As stated, the positioning of the turbine elements 5 will be oblique with respect to the geometric axis of the module, such that the passage of the wave is better utilized and the output is thus increased since the wave is forced to continue along a path including the entire length of each of the turbines.

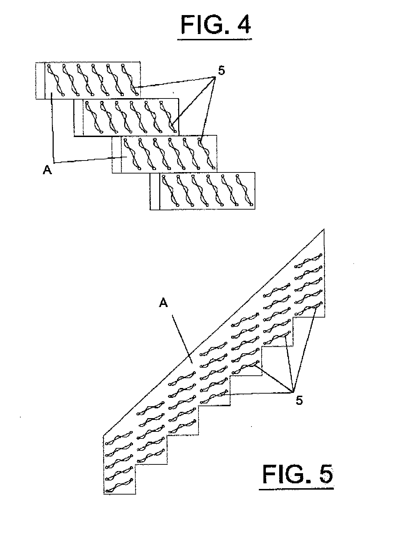

The arrangement of the turbines can be more clearly seen in the schematic depiction of Figures 4 and 5, included solely for the purposes of illustrating the positioning of a multiple number of laterally coupled individual modules A which form a common, staggered front to the passage of the waves.

Figure 5 shows a single huge platform A in staggered form. The illustration of the turbine elements 4 is shown positioned such that it has a certain inclination with respect to the geometric axis of the platform A.

Finally, Figure 4 schematically shows an installation of multiple modules or platforms A, clustered with one another in a staggered manner and on whose surfaces there are multiple turbines 5 following oblique directions with respect to the approach of the wave and to the geometric axis of the platforms.

In addition, the floating platform A is extended in depth with another compartment 2, which is actually a large air chamber. Its purpose is to maintain the stability and the waterline of the platform A at all times. The compartment 2 is in turn divided into other compartments which are filled with air and water in an approximately equal proportion. There is a two-way piston 12 at the end of each compartment 2 at the upper end of which piston there is a groove 13 through which both spaces of water and air communicate. In the event that the piston moves from either one side or the other, the air that is above the water is displaced in one direction or the other, more or less air or water being accumulated in each space. These pistons 12 will be mobilized electromagnetically and by computer in order to be able to maintain the appropriate waterline of the platform A. In special cases in which the platform must support a large weight, the water of the compartments could be partially or completely replaced with air by means of powerful injectors.

In addition, the floating platform extends in depth with a third compartment considered to be the basement of the platform, located under the second compartment. The purpose of this compartment, which has variable dimensions, is to be a large potential air chamber given the possible circumstance of the existence of rogue waves or rough sea. Its essential purpose is to maintain the stability and the waterline of the platform at all times and constantly related to the second compartment. Its operation would be similar to that of the second compartment.

The foregoing description has allowed showing the features of a turbine installation designed and built according to a first preferred embodiment provided for utilizing the kinetic energy inherent to the movement of the sea's waves, and for converting it into a form of energy that can be directly utilized outside, such as for electrical energy. However, as stated in the description provided, the invention provides a second embodiment which even improves some of the aspects of the installation and complements others, as described below.

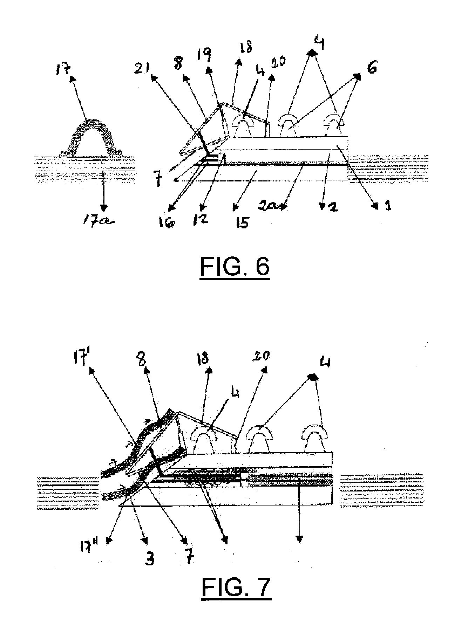

According to the features of this second embodiment, if the view of Figure 6 of the drawings is first considered, a schematic side elevational depiction of the support platform for supporting the turbines generating the movement by the thrust action of the incident waves and transmitting it to the electric generators (not shown) which, as previously stated, are housed in an upper compartment 1 of the platform, can be seen. The intermediate compartment 2 is a chamber which, as in the first embodiment, is intended to contain water and air, the piston 12 being incorporated in said compartment and connected to hydraulic arms 16, whereas the lower compartment 15 also consists, as in the previous embodiment, of a large chamber for containing air and water, with a view to the stability of the assembly. On the part facing the arrival of the wave 17, the platform has a skirt 3 above which a first ramp 7 is located, articulated to the upper edge of the platform by its innermost end, whereas by the outermost end it is also articulated to a second ramp 8, which has an upward inclined positioning with respect to the first ramp as it moves towards the platform, and which continues on the inner edge with a third ramp 18, which has a downward inclined positioning towards the platform, there being a hydraulic arm 19 for supporting the second ramp near the edge for the connection to said third ramp 18. The opening angle of the ramps 7 and 8 is variable always in reference to the force and magnitude of the actual wave. As described, the turbines are supported by supports 6, and covered at the top by means of cowlings 4 for protecting against the fall or the sudden impact of the sea's wave thereon, such that they are only actuated by the movement of the wave along the surface of the platform. Also, in the same way in relation to the first embodiment, the ramp 7 is formed by a grating such that it virtually does not place any resistance against the passage of the portion of wave 17 moving up the skirt 3 in its travel towards the position of the turbines located on the upper surface of the platform.

As can be seen, the third ramp 18 is arranged such that it extends above the first turbine and its associated cowling 4, preventing the wave, with the greatest impact capacity at the time it reaches the platform, from directly hitting against said turbine, as will later be seen in reference to Figure 7. The third ramp 18 is supported by the lower edge on a support 20 emerging from the surface of the platform and provided for such effect. Meanwhile, the piston 12 is located in the initial position of its travel given that there is no force which drives it towards the inside.

If the representation shown in Figure 7 is now analyzed, a schematic view similar to Figure 6 can be seen, but in this figure, said platform has been reached by the incident wave 17. As shown, when said wave reaches the position of the skirt 3, the presence of the second ramp 8 forces it to be divided into two parts, referenced as portion 17' and portion 17". The first portion 17' moves up the ramp 8 such that, once the edge for connecting the latter with the third ramp 18 has been surpassed, it moves down along the surface of the latter, surpasses the position of the first turbine, and reaches the second turbine and subsequent turbines as it moves on the surface of the platform, its kinetic energy being converted into a rotation of the turbines. The abrupt impact on the first turbine, which is the closest to the leading edge, is thus prevented.

Meanwhile, portion 17" moving up the skirt 3 passes through the first ramp 7 due to its being built as a grating, and reaches the first turbine, causing it to move, and continues traveling along the surface of the platform towards the turbines located behind the first one. Simultaneously, the incident action of wave portion 17" produces a thrust on the ramp 8 and the latter in turn moves the piston 12 by means of the hydraulic arms 16, being moved in the direction indicated by the arrow, such that it presses on portion of water 2a, and the air contained in the compartment occupies a rear or proximal position. Then, when the thrust action of the wave ceases because it has surpassed the area of the skirt 3, as indicated in Figure 8, in which both portions 17', 17" of the incident wave will be joined together again after surpassing the first turbine and the third ramp 18, respectively, the piston 12 stops being thrust by the incident wave and returns to its initial position, as indicated by the arrow contained therein, moving the air to form an "air wave" along with the water wave in its travel, effectively collaborating in maintaining the stability and the floatability of the platform.

Therefore, with the arrangement of the third ramp 18, whereby preventing portion 17' of the wave from falling in a cascade, which prevents the wave from falling in a cascade on the turbines and its cowlings 4, combined with the formation of the "air wave" caused by the piston 12, assuring an increased stability capacity and aiding in the floatability of the assembly, a substantially improved functionality is achieved with respect to the platforms in the prior art.

If the depiction shown in Figure 9 of the drawings is now taken into account, the remaining features incorporated by the improvements incorporated by the second embodiment of the present invention relating to both the means for anchoring the platform and to providing an access area for maintenance and repair purposes can be seen.

First, as previously mentioned, Figure 9 is a schematic depiction of an embodiment of a platform for turbines powered by the sea's waves formed by four modules attached to one another, and longitudinally moved for a progressive attack of the incident wave. Of course it will be understood that the embodiment with four modules is only one preferred form of building it but in no case should it be understood as limiting since there could be any other number of modules depending on the particular needs of each specific installation.

According to the depiction, the grating provided for the first ramp 7, the position of the posts 21 between the skirt 3 and the second ramp 8, and the connection of the third ramp 18 with the mentioned second ramp 8 in an open angle can be seen in each module. As stated in the present description, both ramps 8, 18 have raised formations 22a, 22b on both side edges, in the form of channels or tubular shaped for aiding in guiding the portion of the wave moving up the ramps towards the cowlings 4 and the associated turbines located immediately behind the ramps, as stated throughout the present description, are obliquely positioned with respect to the longitudinal axis of the platform so that the attack of the incident wave occurs progressively and in no case abruptly.

According to the invention, the platform has been provided with an access area which in the drawing is shown by means of a raised block indicated with reference number 23. The installation of a first outer stairway (not shown in the Figure) is provided on the rear part with a view to aiding an operator in charge of the maintenance and repair operations to get up on the platform, and the installation of a second stairway (not shown in the Figure) is provided inside such that the operator can go down inside the compartment in which the electric generators are located.

Meanwhile, also according to the invention, the anchor of the assembly has been substantially improved by means of the formation of concrete columns 24 passing through cavities or holes made for that purpose on the sides and in the rear portion of the platform, with respect to which said platform can move upward/downward, whichever is appropriate depending on the rising or ebbing of the tides, said columns therefore acting as guiding elements for the upward or downward movement without subjecting the platform to unwanted lateral and longitudinal movements from back to front or the reverse, thereby assuring the perfect stability of the assembly, regardless of the type and of the magnitude of the incident waves. The anchor has an installation of reinforced concrete on an underwater base formed on rocky ground from which columns 24 emerge, it also being able to have a ground 25 supported on the seabed.

As will be understood, the columns 24 are in turn support elements especially indicated for other additional or complementary functions. Therefore, as mentioned in relation to this second improved embodiment of the invention, it would be possible to install a structure formed by solar panels (not shown) to generate electrical energy from sunlight, which in this case will be fixed to the upper ends of said columns 24.

It is not considered necessary to further extend the content of this description so that a person skilled in the art will understand its scope and the advantages derived from the invention, as well as develop and carry out into practice the object thereof.

Nevertheless, it must be understood that the invention has been described according to a preferred embodiment thereof, therefore modifications are possible but will not involve any alteration of the essential nature of said invention, such modifications particularly being able to affect the shape, size and/or the materials for the manufacture of the assembly or of its parts.

## Claims

1. A turbine powered by the sea's waves, **characterized by** a floating platform (A) adopting the general shape of a parallelepipedic box, consisting of a surface plan on which the turbines (5) with their cowlings (4) and supports (6) are located and three lower compartments (1), (2) and (15) and having coupled at its ends a skirt (3) which is deeply introduced in the vertical position at its rear side and both lateral sides and in the front part in the form of a ramp and it also has coupled thereto in its front part a pair of ramps articulated to one another (7) and (8) which is anchored to the seabed in a conventional manner.

2. The turbine powered by the sea's waves according to the previous claim, **characterized by** the existence on its surface of turbines (5) with helical propellers (2) located diagonally to the platform (A) and to the direction of the waves.

3. The turbine powered by the sea's waves according to claim one, **characterized by** the existence of an upper compartment (1) in which the electric generators converting the rotary movement of the turbines (5) into electrical energy are installed.

4. The turbine powered by the sea's waves according to claim one, **characterized by** the existence of a second compartment (2) in turn formed by smaller compartments (14) and varying in number, being internally occupied by water and air in similar proportions and actuated by two-way pistons (12), said compartments having in their upper part a groove (13) through which water or air is transferred when they are mobilized by the piston (12).

5. The turbine powered by the sea's waves according to claim one, **characterized by** the existence of a third compartment (15) with variable dimensions and features similar to compartment (2) intended to be a large potential air chamber which starts to operate to maintain the stability and waterline of the platform (A) against the possible existence of rogue waves or rough sea.

6. The turbine powered by the sea's waves according to claim one, **characterized by** the existence of a pair of ramps articulated to one another (7) and (8) in the front part of the platform, in a frontal direction to the waves, the first ramp being a fixed grating ramp, the second ramp articulated on the first ramp being mobile.

7. The turbine powered by the sea's waves according to claim one, **characterized by** the existence of semi-cylindrical cowlings (4) located above the turbines (5) and supported on supports (6).

8. The turbine powered by the sea's waves according to claim one, **characterized by** the existence of supports (6) for the shafts of the turbines (5) and of the cowlings (4), they are also used as support and protection for the gears for the mechanical transmission of the rotary movement of the turbines (5) to the lower compartment (2) of the electric generators.

9. The turbine powered by the sea's waves according to the previous claims, **characterized by** the enormous size of the platform (A) thereof whose front part is staggered.

10. The turbine powered by the sea's waves according to the previous claims, **characterized by** being made up of several smaller independent platforms (A) which are coupled to one another in a staggered manner.

11. The turbine powered by the sea's waves according to claim 1, **characterized in that** it comprises:
a third ramp (18) located as a continuation of the second ramp (8) and connected to the innermost edge of the latter, extended in the downward position towards the inside of the platform, above the first turbine and supported on the first cowling (4), held at its innermost end by means of a support (20) emerging from the surface of the platform;
the mentioned piston (12) being included in the intermediate compartment (2), connected to two hydraulic arms (16) such that it is longitudinally pushed with the sea's incident wave (17) towards the inside of the compartment (2), causing it to move and pushing the portion of water (2a) from inside the compartment to move the air towards the proximal part, such that when the action of the sea's incident wave ceases, the recovery of said piston (12) towards the starting position generates the creation of an "air wave" along with the portion of wave (17") moving up the skirt (3), aiding in the stability and floatability feature of the assembly;
the platform incorporates an anchor system preventing any unwanted side or longitudinal movement thereof, and comprising a number of concrete columns (24) emerging from an underwater base (25) made in reinforced concrete on rocky ground, such that said columns (24) pass through cavities or holes made in the platform, in relation to the rear part of both lateral sides and with the rear side, such that it allows the upward/downward movement of the platform depending on the rising or ebbing of the tides, and
the platform has been provided with a construction (23) for accessing the inside of the upper compartment (1) in which the electric generators are located for maintenance and repair purposes, including both an outer stairway and an inner stairway.

12. The turbine powered by the sea's waves according to claim 11, **characterized in that** the side edges of the second ramp (8) and of the third ramp (18) have grooved or tubular-shaped formations (22a, 22b) along the ramps, said formations being intended for better guidance of the portion of wave (17') moving up said ramps and aiming towards the turbines and cowlings (4).

13. The turbine powered by the sea's waves according to claims 11 and 12, **characterized in that** the columns (24) are designed to support any optional structure for supporting solar panels for generating electrical energy.
